Europäisches Patentamt

European Patent Office

Office européen des brevets

(19)

(11) EP 0 822 701 A1

(12) **EUROPEAN PATENT APPLICATION**

(43) Date of publication:
04.02.1998 Bulletin 1998/06

(51) Int Cl.⁶: **H04N 1/192**, G02B 26/08

(21) Application number: 97304506.5

(22) Date of filing: 25.06.1997

(84) Designated Contracting States:
**AT BE CH DE DK ES FI FR GB GR IE IT LI LU MC NL PT SE**

(30) Priority: **31.07.1996 GB 9616027**

(71) Applicant: **Fujifilm Electronic Imaging Limited London NW3 6JH (GB)**

(72) Inventors:
• **Bromley, Nigel Ingram**
  **Great Holm, Milton Keynes, MK8 9EL (GB)**

• **Gouch, Martin Philip**
  **Hemel Hempstead, Herts, HP2 4ND (GB)**

(74) Representative: **Skone James, Robert Edmund GILL JENNINGS & EVERY Broadgate House 7 Eldon Street London EC2M 7LH (GB)**

(54) **Generation of a high resolution representation of an original image**

(57) Apparatus for generating an electronic representation of an original image (2). The apparatus comprises means (3) for projecting at least part of the image onto a detector (7), the detector comprising an array of detector elements which generate respective picture information signals corresponding to respective parts of the projected image; means for generating the electronic representation of the original image in accordance with the picture information signals; and a pair of counter-rotating displacement members (4) which periodically displace the projected image relative to the detector. Each displacement member (4) has a pair of parallel sides through which the image is projected.

Fig.1.

EP 0 822 701 A1

## Description

The present invention relates to a method and apparatus for generating an electronic representation of an original image.

Conventional systems for generating an electronic representation of an original image typically comprise a linear or two-dimensional CCD array onto which all or a part of the original image is projected. The resolution of this type of system is restricted by the spacing of adjacent elements in the CCD array, and in some cases may not be sufficient.

A known method of increasing the resolution is to dither the CCD by displacing the CCD along its length by distances smaller than the spacing between adjacent CCD detector elements and taking a new set of samples from the same line. For example if the CCD is displaced by half the distance between adjacent CCD detector elements then it is possible to take twice the number of samples along a line, and thus double the resolution along the line.

Typically this displacement is caused by a piezo-electric device which can produce the small displacements required for this technique. These devices have a number of problems such as the fact that they are driven by high voltages which it would be preferable to avoid, a drift in calibration as the piezo-electric crystal absorbs moisture, and the difficulty of providing sinusoidal drives which minimise the possibility of setting up mechanical resonances in the scanner.

DE-C-3630739 describes a system for obtaining information from an object. The object is scanned by a light source focused onto a two-dimensional array of CCD elements. Two counter-rotating prisms dither the image over the CCD array. A problem with this system is that the prisms cause an angular deviation of the light which is wavelength dependent due to the dispersion of the glass. This can cause significant lateral chromatic aberration.

In accordance with a first aspect of the present invention there is provided apparatus for generating an electronic representation of an original image, the apparatus comprising means for projecting at least part of the image onto a detector, the detector comprising an array of detector elements which generate respective picture information signals corresponding to respective parts of the projected image; means for generating the electronic representation of the original image in accordance with the picture information signals; and a pair of counter-rotating displacement members which periodically displace the projected image relative to the detector, characterised in that each displacement member has a pair of parallel sides through which the image is projected.

In accordance with a second aspect of the present invention there is provided a method of generating an electronic representation of an original image comprising projecting at least part of the image on a detector having an array of detector elements whereby the detector elements generate respective picture information signals; displacing the image relative to the detector by counter rotating a pair of displacement members; and generating the electronic representation of the original image in accordance with the picture information signals, characterised in that each displacement member has a pair of parallel sides through which the image is projected.

The present invention provides a means of increasing the system resolution by causing a periodic dithering displacement between the projected image and the detector. Typically the displacement is less than the spacing between adjacent detector elements (ie. a "sub-pixel" dither).

The pair of counter-rotating displacement members are particularly simple and easy to drive, in contrast to the conventional systems which dither the detector. In addition the pair of displacement members can be suitably arranged and driven to give a variety of displacement paths to the projected image.

The pair of parallel sided displacement members displace the image with minimum chromatic aberration.

Typically each of the picture information signals comprises a sequence of samples of the projected image taken at sample intervals, the apparatus further comprising means for counter-rotating the displacement members whereby the period of revolution of the displacement members is substantially equal to an integral number of sample intervals.

The detector array may be a two dimensional array onto which the entire original image is projected. However typically the projected image comprises a portion of the original image, and the apparatus further comprises means for generating relative scanning movement between the original image and the detector whereby the detector generates picture information signals for the entire original image. In this case the relative scanning movement and periodic relative displacement can be combined to give a chosen pattern of samples of the original image.

Preferably the pair of counter-rotating displacement members displace the projected image such that the projected image describes a path on the detector having a portion which is substantially linear. By taking a plurality of samples along the linear path, the resulting pattern of samples can be chosen to be substantially rectangular.

Typically the array of detector elements are arranged in one or more rows, for instance the array may be a linear single line or three line (colour) CCD. In this case the linear portion of the path is typically substantially parallel with the row or rows of detector elements.

In a preferable embodiment the phase, rate of rotation and amplitude of displacement is chosen such that three samples can be taken along the CCD for each revolution, with a small displacement in the scanning direction between the samples.

Preferably the displacement members are refractive members such as glass discs.

The periodic displacement may be achieved by forming different materials around the circumference of the refractive member. However preferably the displacement member has a refractive face mounted at a non-perpendicular angle to the optical axis and which is rotated about an axis substantially parallel with the optical axis. The two members may be mounted at different angles, but preferably the faces of the pair of displacement members are mounted at an equal offset angle to the optical axis. The relative phase of the rotation of the pair of members can be suitably adjusted to achieve a required displacement of the projected image.

Preferably one or both of the displacement members comprises a plate having a pair of substantially parallel refracting faces which are mounted at the non-perpendicular angle to the optical axis.

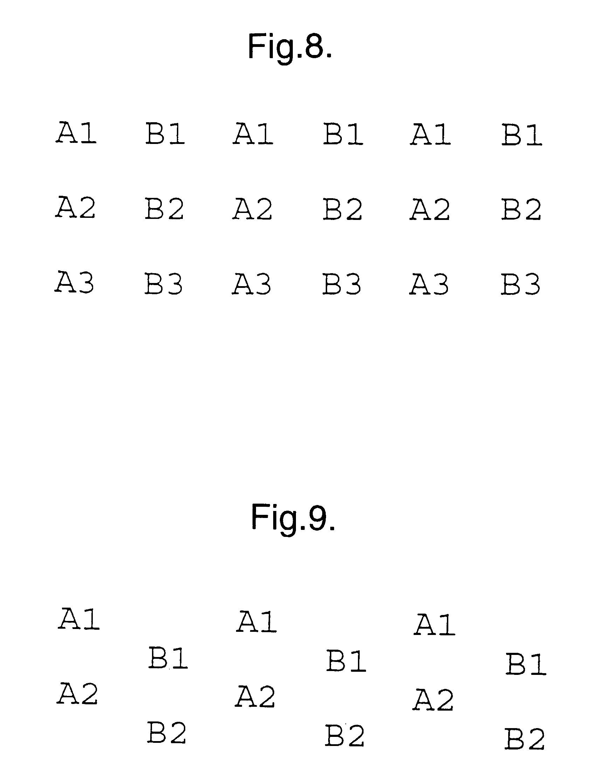

In a conventional dithering system a problem may arise in the arrangement of sampling positions. Ideally the CCD is held stationary at each point in a scan while both sets of samples are taken, then stepped on to the next scanning position. The ideal situation is illustrated in Figure 8, where Al are the positions on an original image where a first set of samples are taken of one line, Bl the second set of pixels taken after a half-pixel lateral movement, A2 the first set of samples from the next line etc.

However if, as is normally more convenient, the slow perpendicular scan is not stepped after each pair of line samples, but is moved steadily, the pattern illustrated in Figure 9 results, which is not ideal.

In accordance with a third aspect of the present invention there is provided apparatus for generating an electronic representation of an original image the apparatus comprising means for projecting at least part of the original image onto a detector, the detector comprising a linear array of detector elements which generate respective picture information signals corresponding to respective parts of the projected image, the array having a length which defines a detector axis; means for generating the electronic representation of the original image in accordance with the picture information signals; means for generating relative scanning movement between the original image and the detector whereby the detector can generate picture information signals for the entire original image; and means for causing periodic relative displacement between the projected image and the detector at an angle offset from the detector axis.

In accordance with a fourth aspect of the present invention there is provided a method of generating an electronic representation of an original image comprising projecting a portion of the original image onto a detector, the detector comprising a linear array of detector elements which generate respective picture information signals corresponding to respective parts of the projected image, the array having a length which defines a detector axis; generating the electronic representation of the original image in accordance with the picture information signals; generating relative scanning movement between the original image and the detector whereby the detector can generate picture information signals for the entire original image; and causing periodic relative displacement between the projected image and the detector at an angle offset from the detector axis

The problems caused by the slow perpendicular relative scanning movement can be solved by moving the detector (or the image projected onto the detector) at an angle, not along the line of the detector array. If the array of sample points is required to be square, ie. the samples are spaced by the same distance on both axes, then the angle is chosen to be 45 degrees (and the amplitude is chosen to be root 2 times the required sample spacing).

The required displacement may be provided by a piezo-electric crystal device moving the detector. Preferably the displacement is achieved by one or more rotating displacement members which displace the projected image relative to the detector. The displacement members may have reflective faces for displacing the projected image. However preferably the displacement members are refractive members such as glass discs.

A number of embodiments of the present invention will now be described with reference to the accompanying Figures, in which:-

Figure 1 is a schematic side view of apparatus according to the first, second, third and fourth aspects of the present invention;
Figure 2 is a plan view of the apparatus illustrated in Figure 1;
Figure 3 is a side view of one of the rotating discs showing displacement of an example ray;
Figure 4 illustrates the path travelled by a point of the projected image on the CCD;
Figure 5 illustrates the path in more detail;
Figure 6 is a schematic illustration illustrating a side view of alternative apparatus according to the third and fourth aspects of the present invention;
Figure 7 illustrates the path travelled by a point of the projected image on the CCD illustrated in Figure 5.
Figure 8 illustrates an ideal rectangular sampling pattern; and
Figure 9 illustrates a non-ideal scanning pattern generated in a conventional system.

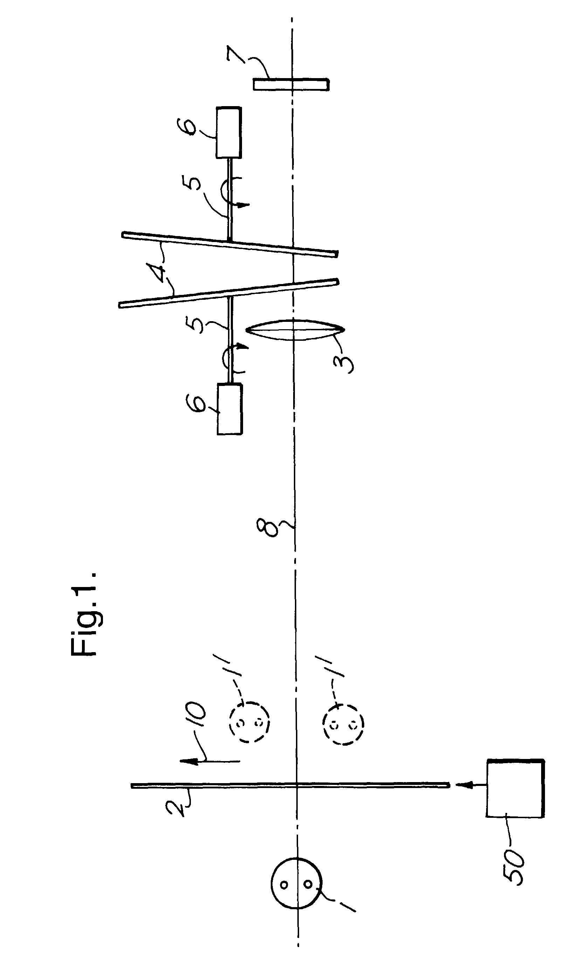

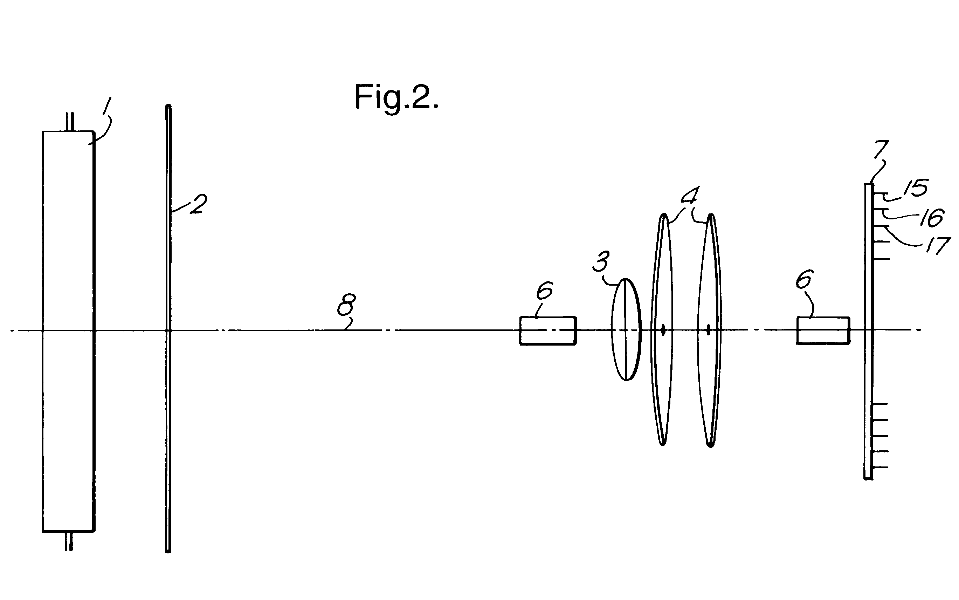

Figures 1 and 2 are schematic side and plan views respectively illustrating apparatus for generating an electronic representation (ie. a pixel map) of an original image carried by transparent copy 2. A linear light source 1 (typically a fluorescent tube) illuminates part of the transparent copy 2. The illuminated area is imaged onto the active area of a CCD 7 by imaging lens 3. The CCD 7 may be a single line monochrome CCD. Alternatively the CCD may be a three line colour CCD, with each line detecting a different colour component. In an alternative, the copy 2 may be reflective, and illuminated by a pair of fluorescent tubes 1' (shown in dotted lines) on the other side of the copy 2. The CCD has a number of detector elements which generate picture information signals on output lines 15-17 etc. which are input to suitable processing electronics (not shown).

The optical axis of the system is illustrated at 8. Two glass discs 4 are centrally mounted onto axes 5 (which typically are parallel with the optical axis 8). The discs 4 have parallel refracting faces which are not perpendicular to the optical axis 8 and which nutate about the optical axis 8 as the discs 4 are counter-rotated independently by electric motors 6.

To scan a complete image, the copy 2 is moved slowly by a copy drive 50 in the direction shown by arrow 10 in Figure 1, and the CCD 7 is made to take samples regularly. In an alternative, all the other components shown in Figure 1 and 2 may be moved, and the copy 2 may remain stationary. The discs 4 are rotated at such a speed that the CCD 7 samples four times for each revolution of the discs 4, to produce a rectangular sampling pattern. Patterns other than four samples per revolution are possible.

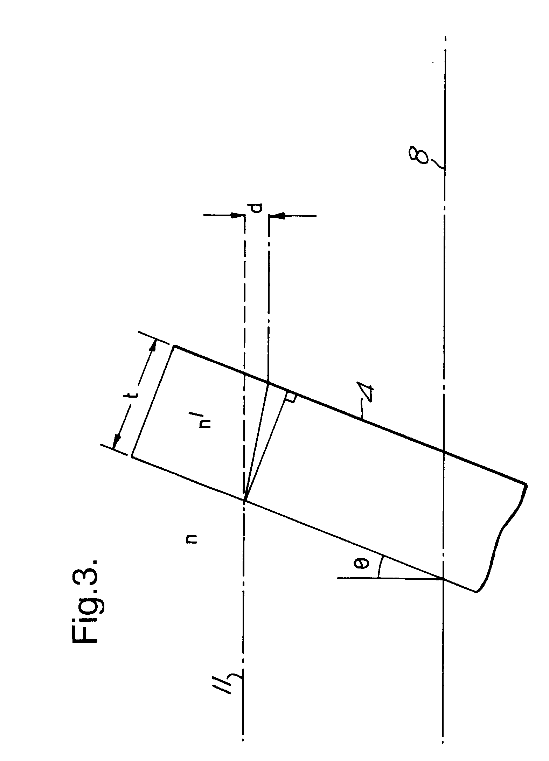

Figure 3 illustrates part of one of the glass discs 4, and shows how the glass disc 4 produces a displacement of a ray 11 without changing its direction. The amount of the displacement may be shown to be, approximately, when the angle $\theta$ (in radians) is small:

$$\theta \times t \ (1 - n/n')$$

in which t is the disc thickness in metres, n is the refractive index of free space, n' is the refractive index of the disk 4, and theta is the angle between the incident ray 11 and the disk 4. The importance of this equation is that the deviation is proportional to $\theta$; therefore the change in deviation as the angle $\theta$ changes, as the disc "wobbles" on its axis, is constant so that all pixels are dithered by the same amount, despite the rays forming the image having a range of angles to the optical axis 8.

Since the ray 11 is displaced without any angular deviation, chromatic aberrations are minimised.

Each disc 4 imparts a circular motion to the emerging beam. For the first disc, the deviation is

$$x = a \sin (wt)$$

$$y = a \cos (wt)$$

where a is the peak deviation (depending on the optical index of the glass, the thickness of the glass, and the "wobble angle" $\theta$ at which the disk is mounted), w the angular velocity, t the time, x,y the beam deviation on two perpendicular axes.

For two counter-rotating discs we have a total deviation of

$$x = a \sin (wt) + a \sin (-wt + d)$$

$$y = a \cos (wt) + a \cos (-wt + d)$$

where d is a phase offset between the discs.

The resultant motion is linear, of total length 2a, and frequency w, at an angle d/2. This motion provides optimum sample positioning for square samples, and close to optimum for common non-square samples.

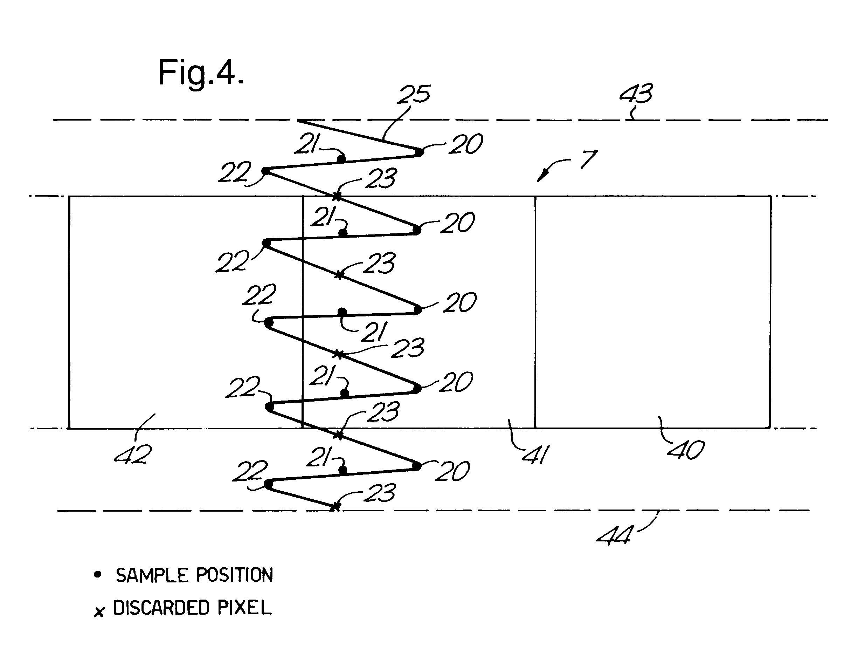

The phase offset d, amplitude a and frequency w can then be adjusted to achieve three samples along the CCD spaced along a substantially linear path with small displacement between the three pixels across the CCD, as illustrated in Figure 4. Note patterns other than four samples per revolution are possible.

Figure 4 is a view of part of the CCD 7 as viewed from the left hand side of Figure 1. The CCD has a linear array of detector elements (typically of the order of 5000-10000 elements) three of which are shown in Figure 4 (numbered 40-42). Each detector element 40-42 comprises a light sensitive element which accumulates charge in response to incident light over an integration period I, and transfers the charge over a subsequent transfer period T. The imaging lens 3 projects a part of the illuminated image on copy 2 such that the projected image forms in the plane of the CCD 7 in the area bounded by dotted lines 43,44 in Figure 4.

The path of a single image point across the CCD is illustrated at 25. When the image point is at the positions indicated at 20-23, the detector elements are in the middle of a respective integration period I. Each integration period is separated from adjacent integration periods by an equal interval. The integration period I can be adjusted as required, and in the limiting case where I tends to zero, then the points 20-23 can be considered to represent pixel sampling times, ie. times at which a "snapshot" of the projected image is taken. Typically, the integration period I is short relative to the pixel sampling time, so this is a good approximation. The pixels sampled at 23 are discarded, leaving an approximately rectangular pixel map formed by pixels sampled at points 20-22 which does not have the offset present in a conventional system due to the slow scan 10. The pixel map has three times the horizontal resolution of the CCD 7.

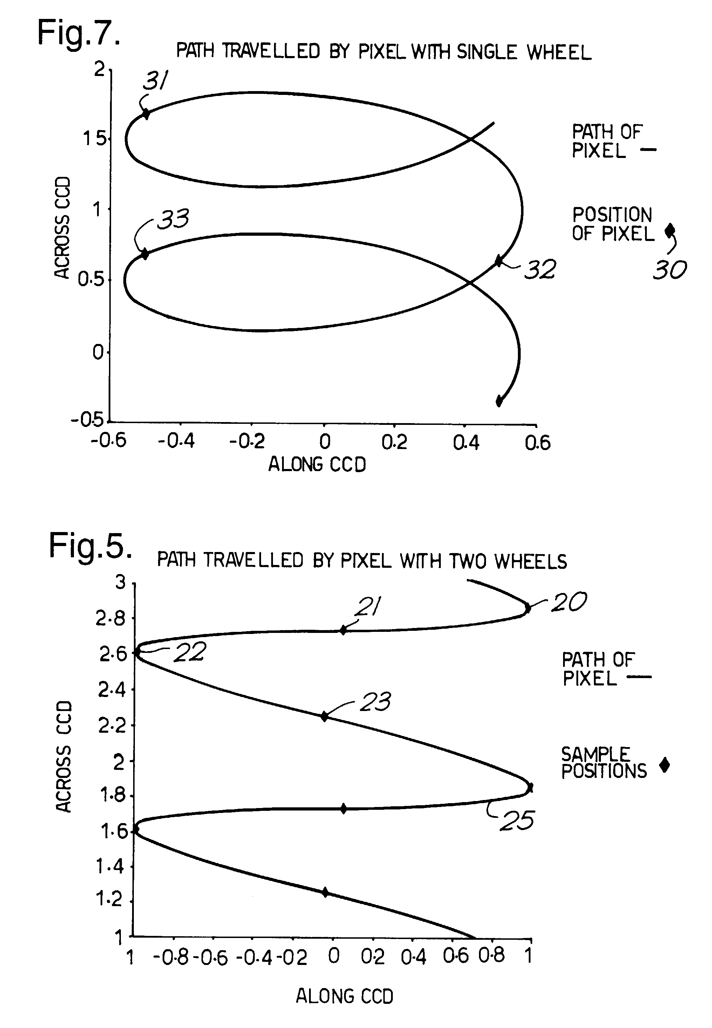

Figure 5 illustrates the path 25 in more detail. The horizontal axis represents distance along the linear axis of the CCD 7. Each unit of the horizontal scale represents 1/3 of the spacing between adjacent detector elements on the CCD. The vertical scale represents distance across the CCD 7. Each unit of the vertical scale represents 1/3 of the height of the detector elements. It can be seen that the path 25 has a substantially linear portion in which the three regularly spaced samples 20-22 are taken. In addition it can be seen that the three sample points 20-22 are each vertically separated by only approximately 1/10th of the detector height. Again this is just one example.

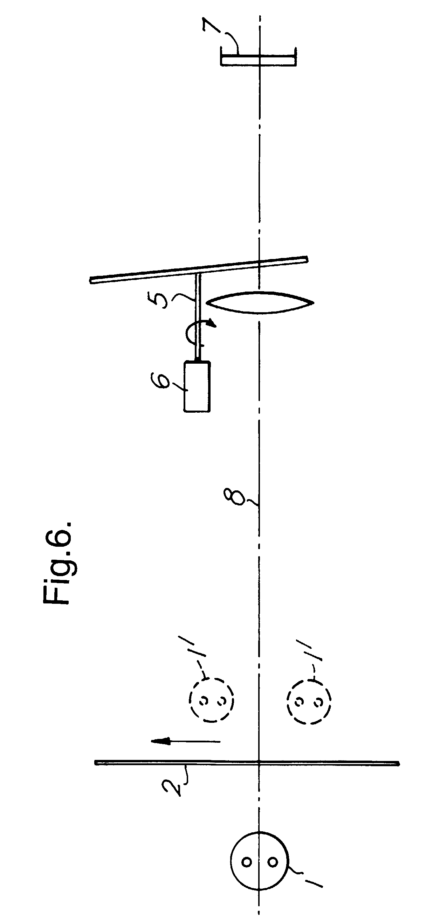

Figure 6 is a schematic illustration of an alternative apparatus incorporating a single disc 4. The rest of the apparatus is identical to the apparatus illustrated in Figures 1 and 2, and identical reference numerals are therefore used.

The single rotating disc 4 produces a displacement of the image on the CCD 7 in a circular motion. When the relative scanning motion 10 is introduced, the linear motion of the scanning mechanism combines with the circular motion of the image to produce an overall path 35 travelled by each image point which is cycloidal in nature, as illustrated in Figure 7. In the case of Figure 7, each unit of the horizontal scale represents 1/2 the distance between adjacent detector elements of the CCD 7.

The cycloidal path 35 is conveniently used to obtain a true rectangular array of sampling at twice the resolution of the CCD 7 by sampling regularly at the points 30-32 illustrated in Figure 7.

## Claims

1. Apparatus for generating an electronic representation of an original image, the apparatus comprising means for projecting at least part of the image onto a detector, the detector comprising an array of detector elements which generate respective picture information signals corresponding to respective parts of the projected image; means for generating the electronic representation of the original image in accordance with the picture information signals; and a pair of counter-rotating displacement members which periodically displace the projected image relative to the detector, characterised in that each displacement member has a pair of parallel sides through which the image is projected.

2. Apparatus according to claim 1 wherein the pair of counter-rotating displacement members displace the projected image such that the projected image describes a path on the detector having a portion which is substantially linear.

3. Apparatus according to any of the preceding claims, wherein the array of detector elements are arranged in one or more rows and the linear portion of the path is substantially parallel with the rows.

4. Apparatus according to any of the preceding claims, wherein the array of detector elements is linear.

5. Apparatus according to any of the preceding claims, wherein each of the picture information signals comprises a sequence of samples of the projected image taken at sample intervals, the apparatus further comprising means for counter-rotating the displacement members whereby the period of revolution of the displacement members is substantially equal to an integral number of sample intervals.

6. Apparatus according to claim 5 and at least claim 2 further comprising means for discarding samples which are taken when the projected image is not following the substantially linear portion of its path on the detector.

7. Apparatus according to any of the preceding claims wherein the projecting means defines an optical axis, and wherein each counter-rotating displacement member has a reflective or refractive face mounted at a non-perpendicular angle to the optical axis and which is rotated about an axis substantially parallel with the optical axis.

8. Apparatus according to claim 7 wherein the faces of the pair of displacement members are mounted at an equal offset angle to the optical axis.

9. Apparatus according to claim 7 or 8 wherein one or both of the displacement members comprises a plate having a pair of substantially parallel refracting faces which are mounted at the non-perpendicular angle to the optical axis.

10. Apparatus according to any of the preceding claims wherein the projected image comprises a portion of the original image, and wherein the apparatus further comprises means for generating relative scanning movement between the original image and the detector whereby the detector generates picture information signals for the entire original image.

11. A method of generating an electronic representation of an original image comprising projecting at least part of the image on a detector having an array of detector elements whereby the detector elements generate respective picture information signals; displacing the image relative to the detector by counter-rotating a pair of displacement members; and generating the electronic representation of the original image in accordance with the picture information signals, characterised in that each displacement member has a pair of parallel sides through which the image is projected.

12. Apparatus for generating an electronic representation of an original image the apparatus comprising means for projecting at least part of the original image onto a detector, the detector comprising a linear array of detector elements which generate respective picture information signals corresponding to respective parts of the projected image, the array having a length which defines a detector axis; means for generating the electronic representation of the original image in accordance with the picture information signals; means for generating relative scanning movement between the original image and the detector whereby the detector can generate picture information signals for the entire original image; and means for causing periodic relative displacement between the projected image and the detector at an angle offset from the detector axis.

13. Apparatus according to claim 12 wherein the means for causing periodic relative displacement comprises a rotating displacement member which displaces the projected image relative to the detector.

14. Apparatus according to claim 12 wherein the means for causing a periodic relative displacement comprises means for displacing the detector relative to the projected image.

15. A method of generating an electronic representation of an original image comprising projecting a portion of the original image onto a detector, the detector comprising a linear array of detector elements which generate respective picture information signals corresponding to respective parts of the projected image, the array having a length which defines a detector axis; generating the electronic representation of the original image in accordance with the picture information signals; generating relative scanning movement between the original image and the detector whereby the detector can generate picture information signals for the entire original image; and causing periodic relative displacement between the projected image and the detector at an angle offset from the detector axis.

# Fig.1.

Fig.2.

Fig.3.

# Fig.4.

- SAMPLE POSITION
- × DISCARDED PIXEL

EP 0 822 701 A1

# Fig.7.

### PATH TRAVELLED BY PIXEL WITH SINGLE WHEEL

PATH OF PIXEL —

POSITION OF PIXEL ◆

30

# Fig.5.

### PATH TRAVELLED BY PIXEL WITH TWO WHEELS

PATH OF PIXEL —

SAMPLE POSITIONS ◆

## Fig.6.

# Fig.8.

A1   B1   A1   B1   A1   B1

A2   B2   A2   B2   A2   B2

A3   B3   A3   B3   A3   B3

# Fig.9.

A1        A1        A1
    B1        B1        B1
A2        A2        A2
    B2        B2        B2

# EP 0 822 701 A1

| | European Patent Office | **EUROPEAN SEARCH REPORT** | Application Number |
| | | | EP 97 30 4506 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 680 206 A (THOMSON CSF)<br>* page 3, line 43 - line 48 *<br>* page 4, line 25 - line 28 *<br>* page 4, line 48 - line 55 *<br>--- | 1,11 | H04N1/192<br>G02B26/08 |
| X | PATENT ABSTRACTS OF JAPAN<br>vol. 014, no. 108 (E-0896), 27 February 1990<br>& JP 01 309479 A (NIKON CORP), 13 December 1989,<br>* abstract *<br>--- | 1,11 | |
| A | DE 36 30 739 C (CARL ZEISS) 7 April 1988<br>* column 9, line 63 - column 10, line 21 *<br>* column 3, line 46 - column 4, line 3 *<br>* column 2, line 54 - column 3, line 17 *<br>* abstract *<br>--- | 1,7-9,11 | |
| A | FR 2 690 030 A (SODERN) 15 October 1993<br>* page 7, line 14 - line 24 *<br>* page 9, line 28 - page 11, line 35 *<br>* figure 3 *<br>--- | 12,15 | TECHNICAL FIELDS<br>SEARCHED (Int.Cl.6)<br><br>H04N<br>G02B |
| A | EP 0 692 905 A (IBM) 17 January 1996<br>* column 19, line 54 - column 21, line 34 *<br>* column 13, line 20 - column 14, line 2 *<br>* column 4, line 51 - column 5, line 4 *<br>--- | 12-15 | |
| A | FR 2 155 840 A (LABO ELECTRONIQUE PHYSIQUE) 25 May 1973<br>* page 5, line 32 - page 6, line 10 *<br>* page 7, line 32 - page 8, line 30 *<br>--- | 12-15 | |
| A | EP 0 627 848 A (HAMAMATSU PHOTONICS KK) 7 December 1994<br>* figure 2 *<br>---<br>-/-- | 9 | |

The present search report has been drawn up for all claims

| Place of search | Date of completion of the search | Examiner |
|---|---|---|
| THE HAGUE | 12 November 1997 | WENTZEL, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

14

| European Patent Office | EUROPEAN SEARCH REPORT | Application Number |
| | | EP 97 30 4506 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | FR 2 683 639 A (THOMSON CSF) 14 May 1993<br>* page 8, line 7 - page 9, line 13 *<br>* figures 4,5 *<br>--- | 2-4 | |
| A | US 4 453 087 A (LINICK JAMES) 5 June 1984<br>* figures 1-3 *<br>----- | 2,4,7-9 | |
| | | | TECHNICAL FIELDS SEARCHED (Int.Cl.6) |

The present search report has been drawn up for all claims

| Place of search | Date of completion of the search | Examiner |
|---|---|---|
| THE HAGUE | 12 November 1997 | WENTZEL, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)